Europäisches Patentamt

European Patent Office

Office européen des brevets

(11) Publication number: **0 215 836**
**B1**

(12) **EUROPEAN PATENT SPECIFICATION**

(45) Date of publication of patent specification: **28.11.90**

(21) Application number: **86901479.5**

(22) Date of filing: **25.02.86**

(86) International application number:
**PCT/IT86/00015**

(87) International publication number:
**WO 86/04976 28.08.86 Gazette 86/19**

(51) Int. Cl.⁵: **F 16 T 1/00, B 60 T 17/00**

(54) **AUTOMATICALLY CONTROLLED APPARATUS FOR DRAINING CONDENSATE FROM PRESSURIZED GAS RESERVOIRS.**

(30) Priority: **26.02.85 IT 4773285**

(43) Date of publication of application:
**01.04.87 Bulletin 87/14**

(45) Publication of the grant of the patent:
**28.11.90 Bulletin 90/48**

(84) Designated Contracting States:
**AT BE CH DE FR GB LI LU NL SE**

(56) References cited:
**DE-A-1 580 111**
**FR-A-2 082 631**
**GB-A- 690 862**
**GB-A-1 063 362**
**US-A-3 282 293**

(73) Proprietor: **MIULLI, Aldo**
**Via dei Castani 45 L**
**I-00172 Roma (IT)**

(72) Inventor: **MIULLI, Aldo**
**Via dei Castani 45 L**
**I-00172 Roma (IT)**

(74) Representative: **Sneider, Enrico**
**Studio Lenzi Via Lucania, 13**
**I-00187 Roma (IT)**

## Description

This invention relates to a field of pressurized gas feeding systems, particularly compressed air feeding systems, provided with one or more air receivers and more specifically the pneumatic systems used for operating the heavy industrial vehicles.

As well known, a considerable amount of water produced by condensation of the humidity always present in the atmospheric air deposits on the bottom of the air receivers. Such water deposit in undesirable as it may cause even very serious damages both to the containing receivers and the compressed air utilizing systems. For instance, the water on the bottom of the reservoir can cause the oxidation and then the corrosion of the reservoir walls to be initiated. Furthermore, the water can be entrained into the conduits in which it may freeze in case of a low outer temperature, thus causing the conduits to be occluded and broken with the tragic event which may result when said conduits are connected to the braking system of a heavy vehicle. It follows that the drainage of the water deposit from the air receivers, which is very expedient in case of stationary compressed air systems, becomes an absolute necessity in case of systems destined to heavy vehicles and mainly in case of braking systems. Unfortunately there is at the time being no efficient device carrying out automatically and with the desired frequency the drainage of the condensate deposits existing in the air receivers of the industrial vehicles. In most cases, however, each air receiver of an industrial vehicle—it should be noted that each heavy vehicle has typically more than one air receiver, e.g. there are vehicles having six or more air receivers—is provided with a manual condensate drainage apparatus, typically a snifting valve. This rather primitive solution, which is not able for certain by itself to assure that the necessary drainage of the condensate deposits is carried out with the due reliability, is further impaired by the placement of the various air receivers under the frame of the vehicle in hardly accessible positions. It follows that the manual condensate drainage operation is usually carried out only in case the vehicle is stopped for repair or maintenance reasons.

Therefore, the gravity of the danger inherent to the lack of a periodic and frequent condensate drainage of the air receivers, which the heavy vehicles are equipped with, caused such vehicles to be necessarily provided with an automatic apparatus providing for such an operation. It should be noted that, since the condensate drainage causes necessarily the outlet of compressed air, the operation of such an automatic apparatus has to provide for the opening of the valve devices being limited to the time strictly necessary for the drainage of the condensate in order to avoid the total leakage of the compressed air contained in the air receiver or most of it.

Failing this feature, i.e. the possibility of causing a very short opening of the condensate drainage valve in order to avoid the loss of compressed air from the air receiver, the automatic condensate drainage apparatus of the present status of art available on the market are less efficient as they cause a leakage of the compressed air contained in the air receivers.

Some attempts have been made in order to solve this problem as in the closest prior art represented by DE—A—1 580 111, wherein an automatically controlled apparatus for draining the condensate from the pressurized gas reservoirs according to the first part of Claim 1 is shown.

The drawback of this apparatus is that the control means operation is not automatically caused by a routine operation of the vehicle.

Another attempt is contained in GB—A—1 063 362, the subject matter of which is an automatically controlled apparatus for the condensate separation and collection, including a control means designed for being automatically operated whenever the motor of the vehicle is stopped. A control system is connected to said control means so as to perform at least a control stroke at any operation of the control member, a valve device being operated by said control system in order to pass from the closed to the opened position and vice versa at any stroke of said control system.

However the construction of the valve members can cause only a condensate drainage for each operation, where a double drainage would be advantageous.

Therefore, this invention seeks to provide an apparatus able to cause the condensate to be drained from all air receivers of an industrial vehicle with an optimized frequency and in an automatic manner when the motor of the vehicle is stopped, which is a typical and frequency operation of the vehicle.

Another object of the invention is to provide an apparatus causing a short opening of the valves such as to reduce the leakage of compressed air from the air receivers to that which is strictly necessary.

Still another object of the present invention is to provide a drainage valve device particularly able to be used in the automatically controlled apparatus for the condensate drainage from the air receivers.

To accomplish the proposed objects the invention provides a compact, inexpensive, effective apparatus that, being connected by separate conduits to each condensate drainage outlet on the bottom of each air receiver and to an often operated member of the vehicle embodying the apparatus, causes the condensate to be drained when operating said member.

More exactly, it is described and illustrated an embodiment of the apparatus which is connected to the member that almost in the whole of the industrial vehicles controls the stop of the motor by acting on the injection pump.

The apparatus for the automatic condensate drainage from the air receivers according to a preferred embodiment essentially includes: a drainage valve device provided in each air receiver of the vehicle with the relative piping system connected to the drainage opening of the receiver a slide member operating at the same time all condensate drainage valve devices; a pneumatic double-acting cylinder and piston assembly having two chambers placed at the opposite ends of the plunger in contact with the slide member operating the drainage valve devices; a first pipe connecting a first chamber of the pneumatic assembly to a compressed air source; a second pipe connecting the second chamber of the pneumatic assembly to a compressed air source; a first two-position valve with rotatable valve member placed in the first connecting pipe; a second, two-position valve with rotatable valve member placed in the second pipe; a control means operating at the same time said first and second two-position valves and drivingly connected to the member acting on the injection pump of the motor in order to cause the latter to be stopped. It should be appreciated that the apparatus according to the invention carries out the drainage of all reservoirs wherever the various air receivers are placed in the vehicle as it will be apparent from the following detailed description.

Furthermore, it should be noted that both two-position valves drivingly connected to each other are inserted in the respective pipes so that when one of them is in the position in which the compressing air flows towards the respective chamber of the pneumatic double-acting assembly, the other valve is in the opened position connected to the atmosphere, and vice versa. In operation, the control of the member causing the motor to be stopped allows the state of both two-position valves to be changed so as to cause a displacement of the plunger of the pneumatic double acting assembly with the consequence of a displacement of the slide member that controls, therefore, all drainage valve members to be changed from the steady closed position to the opened position, whereupon to a second transitory closed position, again to the opened position and finally to the steady closed position.

The drainage valve device, which is an object of the present application too, essentially includes: a finned cylindrical casing, a frustum-conical on-off valve member; a valve stem operating the on-off valve member and connected to the latter; a valve return spring for the valve stem; and a splined cylindrical head integral with the frustum-conical valve member.

The splined cylindrical head integral with the frustum-conical valve member is placed in the chamber of the valve casing connected to the air receiver from which the condensate has to be drained and consequently said head is exposed to the latter.

Such cylindrical head, however, has a circular outer face and an inner face in form of a circular corona, the area of which is much smaller than the outer face, at the connection with the frustum-conical valve member so that, owing to the splines the air pressure acts on opposite surfaces having very different area as described into detail afterwards.

An embodiment and the operation of the apparatus according to the invention will be more readily apparent from the following description with reference to the accompanying drawings, in which:

Figure 1A is a general schematic view of the apparatus placed in an industrial vehicle having six air receivers, the apparatus being in the steady closed position;

Figure 1B is a similar view with the apparatus being in the transitory closed position;

Figure 2 is a perspective, fragmentary view showing in enlarged scale both two-position valves and the control member;

Figure 3 is an axial, fragmentary section showing an enlarged scale one of the condensate drainage valve members in the closed position;

Figure 4 is a similar view with the condensate drainage valve members in the opened position; and

Figure 5 is a view similar to the Figures 1A and 1B of a second embodiment of the apparatus;

Figure 6 is an axial section of the condensate drainage valve device in the closed position; and

Figure 7 is a section of the valve device in the opened position.

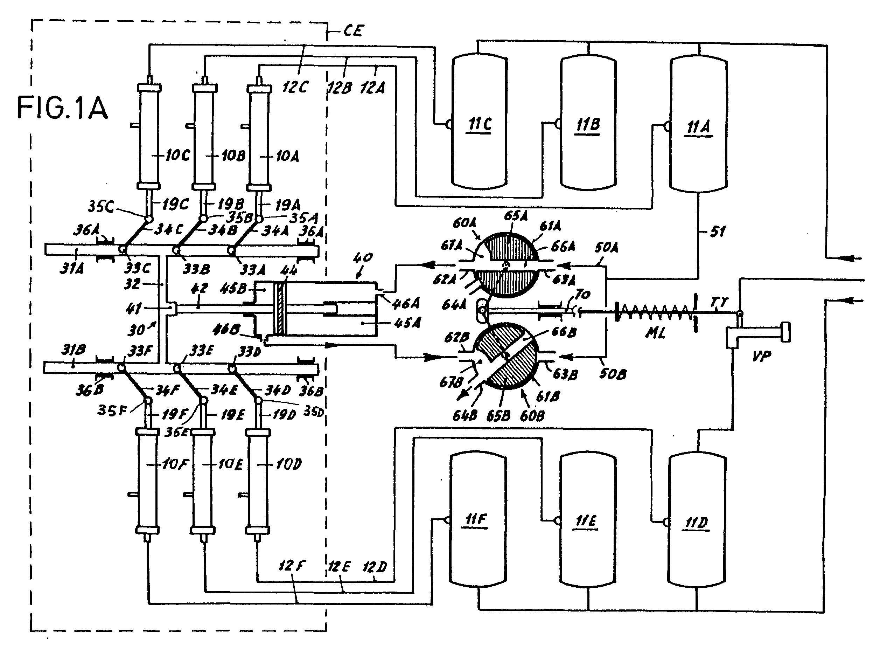

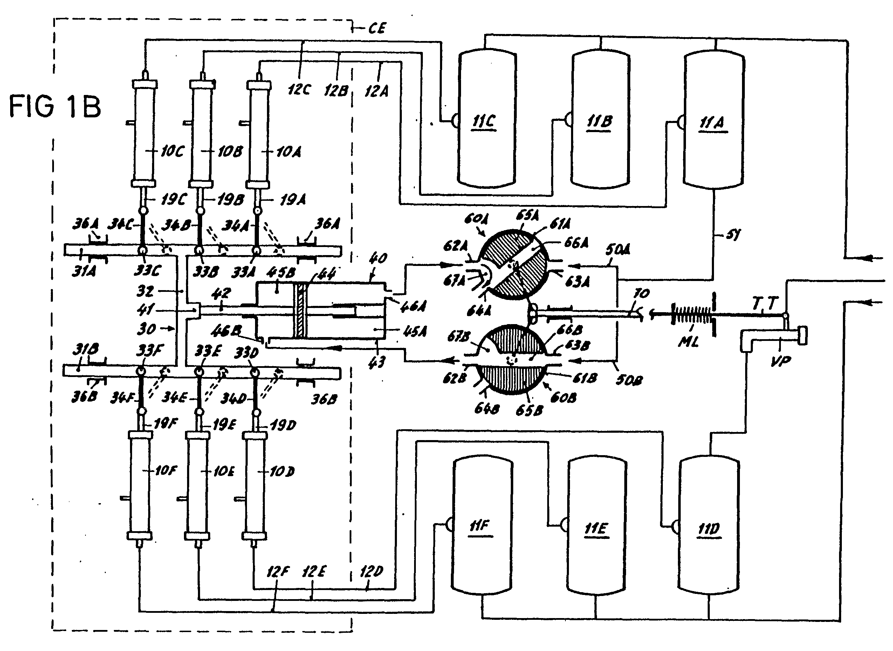

Referring particularly to the Figures 1A and 1B the apparatus according to the invention essentially includes: six condensate drainage valve members preferably arranged on two rows of three valve members each generally designated by 10A—10F and connected each to the drainage opening of the respective reservoir 11A—11F by means of a piping system 12A—12F, respectively; a H-shaped slide member operating at the same time the valve members 10A—10F and generally designated by 30; a pneumatic double-acting cylinder and piston assembly 40; a first pipe 50A feeding comprssed air to a first chamber of the pneumatic assembly; a second pipe 50B feeding compressed air to the second chamber of the pneumatic assembly; a first two-position valve 60A placed in the pipe 50A; a second two-position valve 60B placed in the pipe 50B; and a control member designated by 70 and operating at the same time both two-position valves.

It should be noted that the six valve members 10A—10F, the slide member 30 and the pneumatic assembly 40 are preferably arranged in the same casing CE designated by the dashed line in the Figures 1A and 1B.

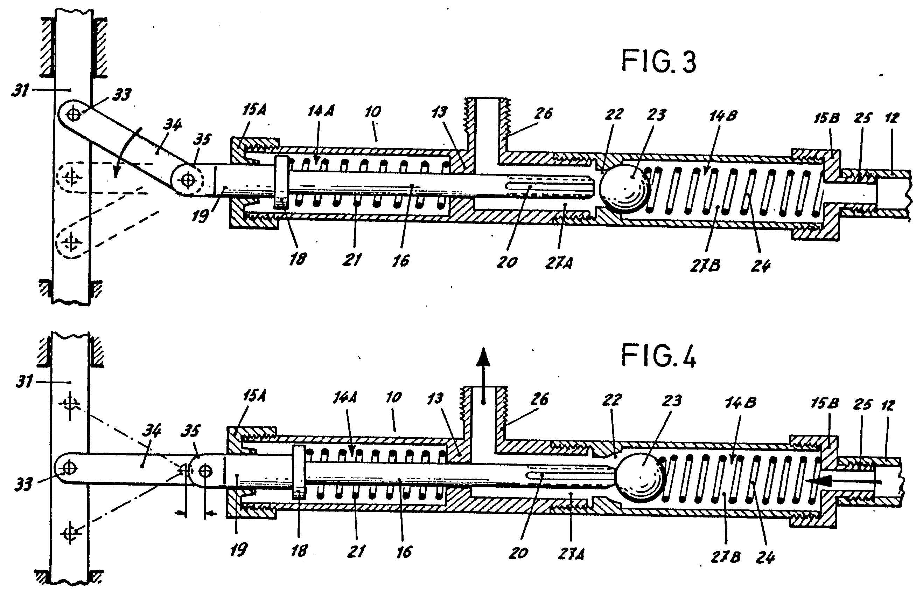

The essential feature of the apparatus of the invention is to drain the condensate in very short time in order to avoid the loss of large amounts of compressed air from the reservoirs. That being stated, the valve member 10A—10F have been designed to accomplish this object and each of them has the embodiment illustrated in the Figures 3 and 4.

As a matter of fact each valve member generally designated by the numeral 10 includes: a cylindrical casing having two chambers 14A and 14B separated by a centrally opened partition 13 and closed by a cover 15A and 15B, respectively; a piston 16 provided with a collar 18 having a flattened end 19 at the outer side of the cover 15A and an inner, axially splined end 20, said piston being slideable into the bores of the cover 15A and the partition 13; a valve spring 21 arranged on the piston 16 and acting as a compression spring between the collar 18 and the partition 13; a valve seat 22 formed in the chamber 14B; a ball valve member 23 placed in the chamber 14B so as to seal the valve seat 22; a spring 24 acting as a compression spring between the ball valve member 23 and the inner face of the cover 15B; a pipe fitting 25 integral with the cover 15B and a drainage branch pipe open to the atmosphere. As clearly illustrated, the valve seat 22 divides the chamber 14B into an inner space 27A communicating with the atmosphere through the branch pipe 26 and in which the end 20 of the piston 16 is arranged, and an outer space 27B communicating with the pipe 12 through the pipe fitting 25 and then with the respective air receiver 11, in which space the ball valve member 23 and the spring 24 are arranged.

It is useful to note that the piston 16 can sealingly slide into the central bore of the partition 13. Turning now to the Figures 1A and 1B the slide member 30 operating the valve members 10A—10F is arranged between two rows of the latter and consists of a H-shaped frame having two arms 31A, 31B parallel to each other and a central traverse 32.

The one ends 33A—33C of three link rods 34A—34C are linked with the arm 31A, while the other ends 35A—35C are linked with the ends 19A—19C of the pistons of the relative condensate drainage valve members 10A—10C, respectively.

Likewise, the three link rods 34D—34F of the arm 31B are linked with the ends 19D—19F of the pistons of the relative condensate drainage valve members 10D—10F, respectively.

Further, the H-shaped slide member 30 guided in two pairs of fixed guide members 36A, 36B is restrained to more only in an axial direction with respect to the casing CE since the cross movements thereof are prevented. The end 41 of the piston 42 of the pneumatic double-acting cylinder and piston assembly 40 is connected to the central transverse 32.

Such pneumatic assembly 40 further includes a cylindrical casing 43 in which the plunger 44 dividing as well known in the inner cavity of the cylinder into two chambers 45A and 45B is sealingly slideable. The chamber 45A has a pipe fitting 46A for the supply of compressed air as well as the chamber 45B has a similar pipe fitting designated by 46B.

As mentioned above the pipe fitting 46A is connected through the pipe 50A to the first two-position valve 60A and the pipe fitting 46B is connected through the pipe 50B to the second two-position valve 60B. As clearly illustrated in the Figures 1A and 1B the pipes 50A and 50B are supplied with compressed air from one of the air receivers 11A—11F and in the present case from the air receiver 11A through the pipe 51. Both valves 60A, 60B of well known type have the same structure and include each a hollow cylindrical casing 61A, 61B having first and second pipe fittings 62A, 62B and 63A, 63B, respectively connected to the outside and diametrally opposite each other, and a third pipe fitting 64A, 64B connected to the outside and arranged at an angular displacement from the first pipe fitting 62A, 62B.

A solid cylindrical body 65A, 65B placed within the casing 61A, 61B is provided with a diametral passageway 66A, 66B at one end of which a chamber 67A, 67B is provided having an angular amplitude equal to the angle between the pipe fittings 62A, 62B and 64A, 64B, respectively.

Each solid cylindrical body 65A, 65B can move within the respective hollow cylindrical casing 61A, 61B by an angular displacement equal to the amplitude of the chamber 67A, 67B, respectively, this movement being controlled from the outside.

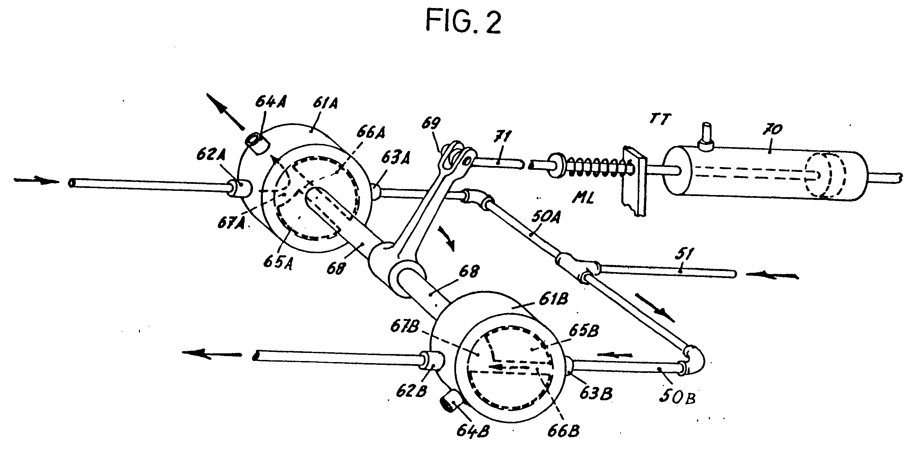

As better illustrated in Figure 2, both solid cylindrical bodies 65A, 65B of the valves 60A, 60B are driven by one shaft 68. Furthermore, the two-position valves 60A, 60B are arranged so that when the diametral passageway 66A of the solid cylindrical body 65A connects the pipe fittings 62A and 63A to each other, the diametral passageway 66B of the other solid cylindrical body 65B is turned with respect to the position of the former, and vice versa.

Therefore, as clearly illustrated, the chambers 67A and 67B, connect the adjacent pipe fittings 62A, 64A and 62B, 64B, respectively, when the diametral passageway 66A and 66B are turned with respect to the position in which they connect the pipe fittings 62A, 64B to the pipe fittings 63A, 63B, respectively.

The control shaft 68 of the rotating bodies 65A, 65B is integral with a lever arm 69, at the other end of which the free end of a piston 71 operated by a member 70 controlling at the same time both valves 60A, 60B is connected.

In the embodiment of the invention herein illustrated and described, the control member 70 is consisting of the pneumatic cylinder and piston assembly that in a well known manner controls in the most of heavy vehicles the turning off of the motor acting on the rackwork of the injection pump.

It is to be intended, however, as repeated afterwards, that such control member can consist of any other pneumatic, electric, electromagnetic, hydraulic or mechanic control member which can perform the same function of the control member 70 described herein.

The operation of the apparatus according to the invention is as follows:

Under normal running conditions of the vehicle the control member 70 is in the position of Figure 1A, in which it is resiliently urged, for example, by the spring ML. Consequently, all members of the apparatus are in the position illustrated in the above mentioned figure. More particularly, the compressed air of the receiver 11A, that reaches the chamber 45A of the pneumatic double-acting assembly 40 through the pipes 51 and 50A and the diametral passageway 66A connecting in the through position the pipe fittings 63A and 62A and closing the pipe fitting 64A, holds the plunger 44 and the slide member as well in their shifted positions on the extreme left in Figure 1A.

It is to be noted that due to the position of the solid cylindrical body 65B the chamber 45B is connected to the atmosphere through the left length of the pipe 50B the pipe fitting 62B, the chamber 67B and the pipe fitting 64B.

The operation of the pneumatic assembly 70, initiated as it is known by the opening of the pneumatic valve VP through the pipe TT (Figure 2) in order to turn off the motor of the vehicle, will cause a stroke to the right of the piston 71 of the assembly 70 (Figures 1B and 2) and then a rotation in the clockwise direction of the solid cylindrical bodies 65A, 65B controlled at the same time by the shaft 68 to the position illustrated in Figure 2.

Consequently, the compressed air of the receiver 11A raises the pressure of the chamber 45B of the slide member 40 through the pipe 51 and the whole length of the pipe 50B owing to the position held by the diametral passageway 66B connecting now the pipe fittings 63B and 62B and closing the pipe fitting 64B (Figure 1B).

Since the chamber 45A is at the atmospheric pressure as the compressed air is blown off in the atmosphere through the left length of the pipe 50A, the pipe fitting 62A, the chamber 67A and the pipe fitting 64A, the plunger 44 moves rightwards in the figure trailing in the same direction the stem of the piston 42 and the slide member 30.

The rightward movement of the slide member 30 causes the movement of the link rods 34A—34C and 34D—34F from the position inclined with respect to the axis of the respective arms 31A and 31B (see Figures 1A and 3) to the position perpendicular to the latter (Figures 1B and 4). Therefore, all pistons 16A—16F move from the poskhion of Figure 3, in which the ball valve member 23 is pressed against the valve seat 22 so as to seal the passageway between the chamber 27B and the chamber 27A, to the position of Figure 4, in which the head 20 of the piston pushes the ball 23 to move away from the seat 22 against the spring 24. Therefore, the condensate on the bottom of the air receivers 11A—11F and in the pipes 12A—12F is quickly expelled into the atmosphere through the chamber 27B, the chamber 27A and the branch pipe 26. It should be appreciated that the opening time of the assembly of the ball valve member 23 and the seat 22 is rather short as the continuation of the stroke of the slide member 30 rightwards causes the latter (and then the link rods 34A—34F) to move to the position illustrated with dashed lines in Figure 1B, in which the seats 22 are sealed again from the balls 23 because of the retraction of the pistons 16A—11F.

At this moment, in the typical operation of the diesel engine the pneumatic assembly 70 is moved again by return spring ML to the position taken during the normal running of the vehicle. This will involve a back stroke leftwards of the slide member 30 with the consequence of a transitory opening of the assembly 23—22 when the link rods 34A—34F move to the positions of the Figures 1B and 4, and an immediate closure when they come back to the positions illustrated in the Figures 1A and 3.

Therefore, each turning off of the vehicle motor will cause a double-acting drainage of the condensate from all air receivers 11A—11F.

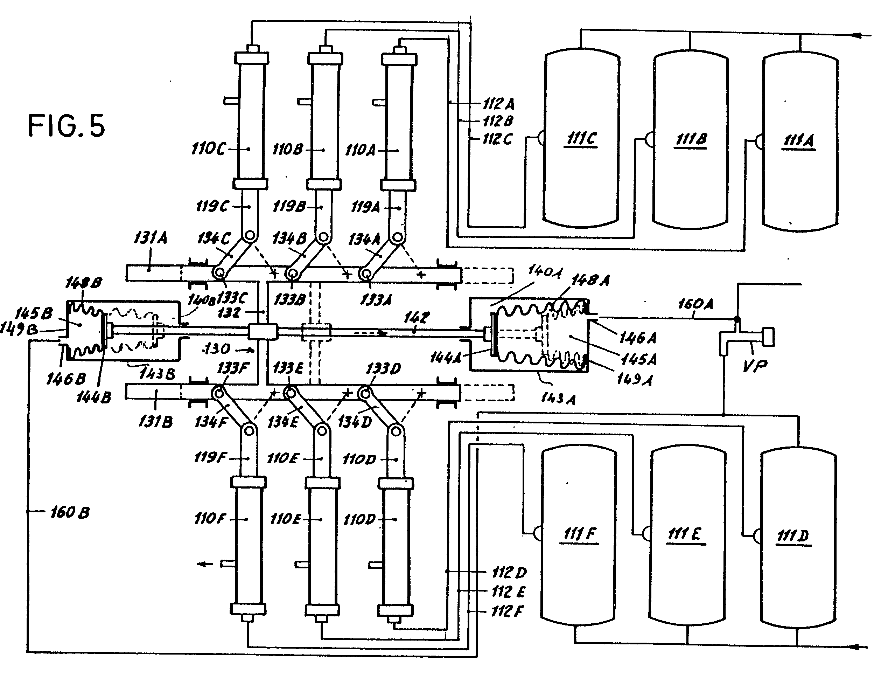

In Figure 5 it is illustrated a second embodiment of the invention, in which the construction formed of the pneumatic double-acting cylinder and piston assembly 40 and both valves 60A, 60B is replaced by two bellow chambers 140A, 140B having control members with different diameters.

As well known by itself each bellow chamber 140A, 140B includes an outer casing 143A, 143B, which is provided with a pipe fitting 146A, 146B for the supplying of the compressed air and within which a control member 144A, 144B is movable together with a bellow 148A, 148B, the latter being connected at one end to the former and at the second end to the bottom 149A, 149B of the respective chamber 140A, 140B.

For the operation of this embodiment it is sufficient to mention that under normal running conditions of the vehicle, the control members 144A, 144B, the slide member 130 and all the other components of the apparatus are in the positions illustrated by dashed lines, as the compressed air from the air receiver 111D through the pipe 160B acts on the inner surface of the control member 144B. The stop of the motor will cause the pneumatic valve VP to be operated and to convey compressed air through the pipe 160A and the pipe fitting 146A within the bellow 148A which will expand and push the control member 144A leftwards in Figure 5. Also the piston stem 142, the traverse 132 and the slide member 130 will move with the control member 144A. This displacement will cause the movement of the link rods 134A—134F as already described with the consequent on-off of the valve member 110A—110F.

As it will be apparent to the skilled in the art the displacement of the slide member 30 can be provided by means of different control members of electric, electromagnetic, mechanic, hydraulic type without departing from the scope of the invention.

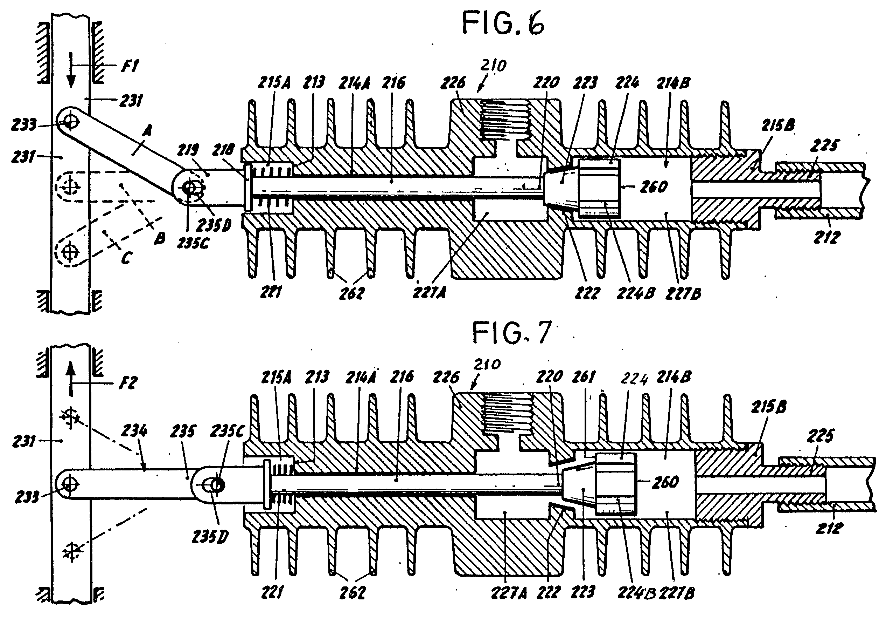

In the Figures 6 and 7 parts of the valve device equal or similar to those shown in the foregoing Figures 1A to 5 are designated by the same reference numerals increased by 200.

As clearly illustrated each cylindrical casing 210 has one side a closed chamber 214B and a cover 215B and on the other side a cylindrical cavity 214A counterbored at its end 215A; a valve stem 216 provided with a collar 218 having a flattened end 219 outside the end 215A of the casing 210 and an inner end 220 connected to a frustum-conical valve member 223, said stem 216 being slideable in the cavity 214A; a spring 221 arranged on the stem 216 and acting as a compression spring between the collar 218 and the bottom 213 of the counterbore 215A; a valve seat 222 formed in the chamber 214B; a frustum-conical valve member 223 arranged in the chamber 214B so as to seal the valve seat 222; a pipe fitting 225 integral with the cover 215B and a branch pipe 226 open to the atmosphere.

As clearly illustrated, the valve seat 222 divides the chamber 214B into an inner portion 227A connected to the atmosphere through the branch pipe 226, in which the end 220 of the stem 216 is received, and an outer portion 227B connected through the pipe fitting 225 to the pipe 212 and then to the respective air receiver 11, in which portion 227B both the valve member 223 and the cylindrical head 224 are received.

The surface of the cylindrical head 224 has splines 224B causing the air pressure from the pipe 212 to act besides on the circular head 260 also on the annular surface 261 surrounding the frustum-conical valve member 223. With such an arrangement the force on the circular head 260 is partially compensated by that on the annular surface 261.

Likewise to what already illustrated and described above the slide member 230 controlling the valve members is arranged between the two rows of the latter and is formed of a frame 231 linked to one end 233 of the link rod 234, the other end 235 of which is linked to the end 219 of the stem 216 of the condensate drainage valve device 210. It is important to be noted that the link between the end 235 and the flattened end 219 is carried out by means of a pin 235C received into a slot 235D of the end 219, thus forming a clearance which will avoid the necessity of a strict tolerance of manufacturing of the single components. As all parts described and illustrated herein are of the same structure, arrangement and operation as described above, the operation of the valve device will be briefly described herebelow.

The forward stroke (arrow $F_1$) of the slide member 231 in the axial direction will cause through the link rod 234 moving from the oblique position A of Figure 6 to the perpendicular direction B of Figure 7, a reciprocating motion of the stem 216 so that the valve member 223 will move away from the valve seat 222, thus allowing the outlet of the condensate into the atmosphere through the branch pipe 226. The valve member 223 will seal then the valve seat 222 when the link rod 234 moves to the position C. Likewise the valve member 223 will open during the return stroke (arrow $F_2$) of the slide member 231 when the link rod 234 moves to the position B and will then close steadily (position A held up to the new operation) at the end of such a return stroke.

It should be appreciated that the movements of the valve stem 216, and then of the valve member 223, are made very smooth and are cushioned by the action of the compressed air on the annular face 261 besides being promoted by the spring 221. Such feature avoids any troublesome striking noise of the valve member 223 against the valve seat 222. To this end an inserted valve seat could be used, as shown in the figures, for example made of either, a different metal than that of the valve casing or of a plastic material.

As it is evident in the figures, the two lengths of the cylindrical valve casing separated by the branch pipe 226 are finned, as designated by 262, in order to dissipate the heat more quickly.

From what above it is clear that the present invention fully accomplishes the above mentioned objects.

## Claims

1. Automatically controlled apparatus for the condensate drainage from the pressurized gas reservoirs (11A—11F) of industrial vehicles, including a control member (40) designated for being automatically operated whenever the motor of the vehicle is stopped, a control system (30) connected to said control member (40) so as to perform at least a control stroke at any operation of the control member (40), a condensate drainage valve member (10) provided for each reservoir (11) from which the condensate has to be drained, each valve member being operated by said control system (30) in order to pass from the closed to the opened position, and vice versa at any stroke of said control system (30) and a pipe (12) connecting the drainage opening of each reservoir (11) to the respective valve member (10), said valve members (10) arranged on two rows of valve members (10A—10C; 10D—10F), characterized in that said control system having a H-shaped slide member (30) arranged between the two rows of said valve members (10) and operating at the same time all said valve members (10) and said control member comprising a pneumatic double-acting cylinder and piston assembly (40) having a first pipe (50A) supplying compressed air to a first chamber thereof and a second pipe (50B) supplying compressed air to a second chamber thereof, a first two-position valve (60A) arranged in said first pipe (50A), a second two-position valve (60B) arranged in said second pipe (50B), and a member (70) operating at the same time both two-position valves (60A, 60B).

2. Apparatus according to Claim 1, wherein each valve member (10A—10F) includes a cylindrical casing having two chambers (14A—14B) separated by a centrally opened partition (13) and closed by a cover (15A and 15B): a piston (16) provided with a collar (18) having a flattened end (19) outside said cover (14A) and an inner end (20) provided with axial splines, said piston (16) being slideable into the opening of said cover (15A) and the partition (13); a spring (21) arranged on said piston (16) and acting as a compression spring between said collar (18) and said partition (13); a valve seat (22) formed in said chamber (14B); a ball valve member (23) arranged in said chamber (14B) so as to seal said valve seat (22); a spring (24) acting as a compression spring between said ball valve member (23) and the inside of said cover (15B); a pipe fitting (25) integral with such cover and a drainage branch pipe (26) opened to the atmosphere; in the valve members (10A—10F) the valve seat (22) dividing the chamber (14B) in an inner portion (27A) which is connected to the atmosphere through the branch pipe (26) and in which the end (20) of the piston (16) is received and in an outer portion (27B) which is connected through the pipe fitting (25) to the pipe (12) and then to the respective air receiver (11) and in which said ball valve member (23) and the spring (24) are received.

3. Apparatus according to Claim 2, wherein said slide member (30) operating the valve members (10A—10F) being formed of the solid H-shaped frame having two arms (31A, 31B) parallel to each other and a central traverse (32), the arm (31A) being linked to the one end (33A—33C) of three link rods (34A—34C) the other ends of which (35A—35C) are linked to the ends (19A—19C) of the pistons of the respective condensate drainage valve members (10A—10C) the arm (31B) being linked to three link rods (34D—34F) which in turn are connected to the outer ends (19D—19F) respectively, of the pistons of the respective condensate drainage valve members (10D—10F).

4. Apparatus according to Claim 3, wherein said H-shaped frame (30) is restrained by the two pairs of fixed guide member (36A, 36B) to move only in an axial direction with respect to the outer casing (CE), the cross movements thereof being prevented, and said central traverse (32) is connected to the end (41) of the piston (42) of said pneumatic double-acting cylinder and piston assembly (40).

5. Apparatus according to Claim 4, wherein said pneumatic double-acting assembly (40) further includes a cylindrical casing (43) in which a plunger (44) dividing the inner cavity of the cylinder into two chambers (45A and 45B) is sealingly slideable, the first chamber (45A) having a pipe fitting (46A) supplying compressed air and the second chamber (45B) having a pipe fitting (46B) also supplying compressed air, the first two-position valve (60A) being arranged in the pipe (50A) connected to said first pipe fitting (46A) and the second two-position valve (60B) being arranged in the pipe (50B) connected to said second pipe fitting (46B), the pipes (50A and 50B) being supplied with compressed air from one of the air receivers (11A—11F) through a pipe (51).

6. Apparatus according to Claim 5, wherein said two valves (60A, 60B) of known type have the same structure and include each a hollow cylindrical casing (61A, 61B) having a first pipe fitting (62A, 62B) and a second pipe fitting (63A, 63B) connected to the outside and diametrically opposite each other, and a third pipe fitting (64A, 64B) connected to the outside and angularly spaced from said first pipe fitting (62A, 62B), and an inner solid cylindrical body (64A, 64B) having a diametral passageway (66A, 66B) at one end of which a chamber (67A, 67B) is placed having an angular amplitude equal to the angular distance between said pipe fittings (62A, 62B) and (64A, 64B), each solid cylindrical body (65A, 65B) being able to move within the respective hollow cylindrical casing (61A, 61B) by an angular distance equal to the amplitude of said chambers (67A, 67B), said movement being controlled from the outside.

7. Apparatus according to Claim 6, wherein said two solid cylindrical bodies (65A, 65B) of said valves (60A, 60B) are operated by one shaft (68) and the valves are arranged so that when the diametral passageway (66A) of a solid body (65A) connects diametrally said pipe fittings (62A) and 63A) to each other, the second diametral passageway (66B) of the second cylindrical body (65B) is turned with respect to the position of the former, and vice versa.

8. Apparatus according to Claim 6, wherein said chamber (67A, 67B) connects the adjacent pipe fittings (62A, 62B) and (64A, 64B) to each other in the position of said diametral passageways (66A, 66B) which is turned with respect to the position in which said pipe fittings (62A, 62B) and (63A, 63B) are diametrally connected to each other.

9. Apparatus according to Claim 8, wherein said control shaft (68) of said rotating bodies (65A, 65B) is integral with a lever arm (69) at the other end of which the free end of a piston (71) operated by a control member (70) operating at the same time both valves (60A, 60B) is connected.

10. Apparatus according to Claim 9, wherein said control member (70) comprises the pneumatic cylinder and piston assembly that controls the turning off of the motor acting on the rackwork of the injection pump.

11. Apparatus according to Claim 1, wherein said control member (40) is formed of two bellow chambers (140A, 140B) having control members (144A, 144B) of different diameter and one piston (142) connected to said slide member (130) that according to the stroke of the piston controls the on-off of said valve members (110A, 110F).

12. Apparatus according to Claim 11, wherein each valve member (10A—10F) essentially includes: a finned cylindrical casing (210), a frustum-conical open-closed valve member (223), a valve stem (216) operating the on-off valve member and connected thereto; a return spring (221) for the valve stem (216) and a cylindrical splined head (224) integral with said frustum-conical valve member (223).

13. Apparatus according to Claim 12, wherein said cylindrical body (210) has a chamber (214B) closed by a cover (215B) on one side and having a cylindrical cavity (214A) on the other side which is counterbored at its outer end (215A) and in which said valve stem (216) is slideable, said valve stem (216) being provided with a collar (218) having a flattened end (219) outside said counterbored end (215A) of said body (210) and an inner end (220) connected to said frustum-conical valve member (223).

14. Apparatus according to Claim 13, wherein a helical spring (221) acting as a compression spring between the collar (218) and the bottom (213) of said counterbore (215A) is arranged at the outer end of said valve stem (216).

15. Apparatus according to Claim 14, wherein a valve seat (222) formed in said chamber (214B) divides the latter into an inner portion (227A) which is connected to the atmosphere through a branch pipe (226) and in which the end (220) of the valve stem is received, and an outer portion (227B) connected to the pipe (212) and then to the respective air receiver through a pipe fitting (225).

16. Apparatus according to Claim 15, wherein a spiral spring (221) acting as a compression spring between said collar (218) and bottom (213) of said counterbore (215A) is arranged at the outer end of said valve stem (216).

17. Apparatus according to Claim 16, wherein a valve seat (222) formed in the chamber (214B) divides the latter into an inner portion (227A) which is connected to the atmosphere through a branch pipe (226) and in which the end (220) of the valve stem is received, and into an outer portion (227B) connected to the pipe (212) and then to the respective air receiver through a pipe fitting (225).

18. Apparatus according to Claim 17, wherein said frustum-conical valve member (223) and cylindrical head (224) are received into the outer portion (227B) so that said frustum-conical valve member seals said valve seat (222) interrupting the connection between the outer portion (227B) and the inner one (227A).

19. Apparatus according to Claim 18, wherein several splines having an axial direction are formed on the surface of the cylindrical head (224), and said valve member (223) is connected to the cylindrical head so as to form about the connecting area an annular face (261) having a smaller area than that of the opposite circular surface (260).

20. Apparatus according to Claim 19, wherein said valve seat (222) consists of an inserted piece.

**Patentansprüche**

1. Automatische Steuervorrichtung für die Kondensatdränage aus Druckgasbehältern (11A—11F) von Industriefahrzeugen, umfassend ein Steuerorgan (40), welches dazu bestimmt ist jedesmal wenn das Fahrzeug angehalten ist automatische benützt zu werden, ein mit diesem Steuerorgan (40) verbundenes Steuersystem (30), derart um wenigstens einen Steuerhub bei jeder Benutzung des Steuerorgans zu vollziehen, ein Kondensatdränage-Ventilorgan (10), welches für jeden Behälter (11) vorgesehen ist, aus dem das Kondensat dräniert werden soll, wobei jedes Ventilorgan von diesem Steuersystem (30) betätigt wird um von der geschlossenen Stellung zur offenen Stellung zu gehen, und umgekehrt bei jedem Hub dieses Steuersystems (30), und eine Rohrleitung (12), welche die Dränageöffnung jedes Behälters (11) mit dem dazugehörigen Ventilorgan (10) verbindet, wobei diese Ventilorgane (10) auf zwei Ventilorganereihen (10A—10C; 10D—10F) angeordnet sind, dadurch gekennzeichnet, dass dieses Steuersystem ein H-förmig fassoniertes verschiebbares Organ (30) hat, welches zwischen den beiden Reihen dieses Ventilorgans (10) angeordnet ist und gleichzeitig alle diese Ventilorgane (10) benützt, und wobei diese Steuerorgane einen Satz (40) von doppelwirkenden pneumatischen Zylinder und Kolben umfassen, welcher ein erstes Rohr (50A) hat, welches Druckluft in seine erste Kammer liefert, und ein zweites Rohr (50B) hat, welches Druckluft in seine zweite Kammer liefert, ein ersten Zweistellenventil (60B), welches in diesem zweiten Rohr (50B) angeordnet ist, und ein Organ (70), welches gleichzeitig beide Zweistellenventile (60A—60B) benützt.

2. Apparat, nach Anspruch 1, bei dem jedes Ventilorgan (10A—10F) eine zylindrische Umhüllung umfasst, welche zwei Kammern (14A—14) hat, welche durch eine mittig offene und durch einen Deckel (15A—15B) verschlossene Abtrennung (13) getrennt sind; einen mit Bund (18) versehenen Kolben (16), welcher ausserhalb dieses Deckels (14A) ein abgeflachtes Ende (19) und ein Ende (20) hat, welches mit achsialen Nuten versehen ist, wobei dieser Kolben (16) in der Öffnung dieses Deckels (15A) und der Abtrennung (13) verschiebbar ist; eine Feder (21), welche ad diesem Kolben (16) angeordnet ist und als Druckfeder zwischen diesem Bund (18) und dieser Abtrennung (13) wirkt; einen Ventilsitz (22), welcher in dieser Kammer (14B) gebildet ist; ein Kugelventilorgan (23), welches in dieser Kammer (14B) angeordnet ist derart um diesen Ventilsitz (22) zu versiegeln; eine Feder (24), welche als Druckfeder zwischen diesem Kugelventilorgan (23) und dem Inneren dieses Deckels (15B) wirkt; ein passendes Rohr (25) in einem Stück mit diesem Deckel und ein Dränagerohrzweig (26), welcher zur Atmosphäre hin offen ist; bei den Ventilorganen (10A—10F) trennt der Ventilsitz (22) die Kammer (14B) in einen inneren Teil (27A), welcher über den Rohrabschnitt (26) mit der Atmosphäre verbunden ist und in dem das Ende (20) des Kolbens (16) aufgenommen ist, und in einen äusseren Teil (27B), welcher über die Rohrkupplung (25) mit dem Rohr (12) und somit mit dem jeweiligen Luftempfäger (11) verbunden ist und in dem dieses Kugelventilorgan (23) und die Feder (24) aufgenommen sind.

3. Apparat, nach Anspruch 2, bei dem dieses die Ventilorgane (10A—10F) betätigende verschiebbare Organ (30) aus diesem H-förmig fassonierten Rahmen gebildet ist, welcher zwei zueinander parallele Arme (31A—31B) und einen zentralen Querträger (32) hat, wobei der Arm (31A) an einem Ende (33A—33C) von drei Verbindungsstäben (34A—34C) gebunden ist, deren andere Enden an den Enden (19A—19C) der Kolben der betreffenden Dränageventilorgane (10A—10C) gebunden sind, wobei der Arm (31B) an den drei Verbindungsstäben (34D—34F) gebunden ist, welche ihrerseits an den äusseren Enden (19D—19F) beziehungsweise der Kolben der betreffenden Kondensatdränage-Ventilorgane (10D—10F) gebunden sind.

4. Apparat, nach Anspruch 3, bei dem dieser H-förmig fassonierte Rahmen (30) von zwei Paaren fester Führungsorgane (36A—36B) gezwungen ist sich nur in einer achsialen Richtung in bezug auf das äussere Gehäuse (CE) zu bewegen, indem dessen Querbewegungen unterbunden sind, und dieser zentrale Querträger (32) am Ende (41) des Kolbens (42) dieses Satzes von doppelwirkenden pneumatischen Zylinder und Kolben (40) gebunden ist.

5. Apparat, nach Anspruch 4, bei dem dieser Satz doppelter pneumatischer Wirkung (40) weiters eine zylindrische Umhüllung (45) umfasst, in der ein Kolben (44), welcher den inneren Hohlraum des Zylinders in zwei Kammern (45A und 45B) teilt, dicht verschiebbar ist, wobei die erste Kammer (45A) ein Rohrzubehör (46A) hat, welches Druckluft speist, und die zweite Kammer (45B) ein Rohrzubehör (46B) hat, welches auch Druckluft liefert, wobei das erste Zweistellenventil (60A) in der Rohrleitung (50A) angeordnet ist, welche an diesem ersten Rohrzubehör (46A) gebunden ist, und das zweite Zweistellenventil (60B) in der Rohrleitung (50B) angeordnet ist, welche an diesem zweiten Rohrzubehör (46B) gebunden ist, wobei die Rohre (50A und 50B) von einem der Luftempfänger (11A—11F) über das Rohr (51) mit Druckluft versorgt werden.

6. Apparat, nach Anspruch 5, bei dem diese zwei Ventile (60A—60B) bekannter Art die gleiche Struktur haben und alle eine hohle zylindrische Umhüllung (61A, 61B) einschliessen, welche ein erstes Rohrzubehör (62A, 62B) und ein zweites Rohrzubehör (63A, 63B) hat, welche aussen und gegeneinander genau entgegengesetzt gebunden sind, und ein drittes Rohrzubehör (64A, 64B), welches aussen und winkelig entfernt von diesem ersten Rohrzubehör (62A, 62B) gebunden ist, und einen vollen inneren zylindrischen Körper (64A, 64B), welcher einen diametralen Durchgang (66A, 66B) hat, an dessen einem Ende eine Kammer (67A, 67B) angeordnet ist, welche eine winkelige Weite gleich dem winkeligen Abstand zwischen diesen Rohrzubehören (62A, 62B) und (64A, 64B) hat, wobei jeder volle zylindrische Körper (65A, 65B) in der Lage ist sich innerhalb der betreffenden holen zylindrischen Umhüllung (61A, 61B) um einen winkeligen Abstand gleich der Weite dieser Kammern (67A, 67B) zu bewegen, indem diese Bewegung von aussen gesteuert ist.

7. Apparat, nach Anspruch 6, bei dem diese zwei vollen zylindrischen Körper (65A, 65B) dieser Ventile (66A, 66B) von einer alleingen Welle (68) betätigt werden und die Ventile derart angeordnet sind, dass wenn der diametrale Durchgang (66A) eines festen Körpers (65A) diese Rohrzubehöre (62A) und (63A) miteinander diametral verbindet der zweite diametrale Durchgang (66B) des zweiten festen Körpers (65B) gedreht ist in bezug auf die Lage des ersten und umgekehrt.

8. Apparat, nach Anspruch 6, bei dem diese Kammer (67A, 67B) die nebeneinanderliegenden Rohrzubehöre (62A, 62B) und (64A, 64B) in der Stellung dieser diametralen Durchgänge (66A, 66B) verbindet, welche in bezug auf die Stellung gedreht ist, in der diese Rohrzubehöre (62A, 62B) und (63A, 63B) diametral miteinander verbunden sind.

9. Apparat, nach Anspruch 8, bei dem diese Steuerwelle (68) dieser Drehkörper (65A, 65B) mit einem Hebelarm (69) aus einem Stück gebildet ist, an dessen anderen Ende das freie Ende eines Kolbens (71) gebunden ist, welcher von einem gleichzeitig beide Ventile (60A, 60B) betätigenden Steuerorgan (70) betätigt wird.

10. Apparat, nach Anspruch 9, bei dem dieses Steuerorgan (70) den Satz pneumatischen Zylinder und Kolben umfasst, welcher die Unterbrechung des Motors steuert, welcher auf die Förderleistung (rackwork) der Einspritzpumpe wirkt.

11. Apparat, nach Anspruch 1, bei dem dieses Steuerorgan (40) aus zwei Faltenbalgkammern (140A, 140B) gebildet ist, welche Steuerorgane (144A, 144B) unterschiedlichen Durchmessers und einen Kolben (142) haben, welcher an dieser verschiebbaren Organ (130) gebunden ist, welches je nach dem Hub des Kolbens die Einschaltung und die Ausschaltung (on-off) der Ventilorgane (110A, 110F) steuert.

12. Apparat, nach Anspruch 11, bei dem jedes Ventilorgan (10A—10F) im wesentlichen folgendes einschliesst: ein geripptes zylindrisches Gehäuse (210), eine kegelstumpfförmiges offengeschlossenes Ventilorgan (223), einen Ventilschaft (216), welcher am offen-geschlossenen Ventilorgan wirkt und an diesem gebunden ist; eine Rückstellfeder (221) für den Ventilschaft (216) und einen gerieften Zylinderkopf (224) in einem Stück mit diesem kegelstumpfförmigen Ventilorgan (223).

13. Apparat, nach Anspruch 12, bei dem dieser zylindrische Körper (210) eine an einer Seite von einem Deckel (215B) verschlossene Kammer (214B) und an der anderen Seite einen zylindrischen Hohlraum (214A) hat, welcher an seinem äusseren Ende (215A) "counterbored" ist, und wobei dieser Ventilschaft (216) verschiebbar ist, dieser Ventilschaft (216) ist dabei mit einem Kragen, d.h. einen Bund (218) versehen, indem eine Ende abgeflacht ist (219) ausserhalb dieser "counterbored" Endes (215A) dieses Körpers (210) und ein inneres Ende (220) an dieses kegelstumpfförmige Ventilorgan (223) gebunden ist.

14. Apparat, nach Anspruch 13, bei dem eine schraubenförmige Feder (221), welche als Druckfeder zwischen dem Bund (218) und dem Grund (213) dieses "counterbore" (215A) wirkt, am äusseren Ende dieses Ventilshaftes (216) angeordnet ist.

15. Apparat, nach Anspruch 14, bei dem der in der Kammer (214B) geformte Ventilsitz (222) letztere in einen inneren Teil (227A) trennt, welcher über einen Rohrzweig (226) mit der Atmosphäre verbunden ist und wo das Ende (220) des Ventilschaftes aufgenommen ist, und einen äusseren Teil (227B), welcher ander Rohrleitung (212) und somit an dem entsprechenden Luftempfänger über ein Rohrzubehör gebunden ist.

16. Apparat, nach Anspruch 15, bei dem eine Spiralfedere (221), welche als Druckfeder zwischen dem Bund (218) und dem Grund (213) dieses "counterbore" (215) wirkt, am äusseren Ende des Ventilschaftes (216) angeordnet ist.

17. Apparat, nach Anspruch 16, bei dem der in der Kammer (214B) geformte Ventilsitz (222) letztere in einem inneren Teil (227A) trennt, welcher über einen Rohrzweig (226) mit der Atmosphäre verbunden ist und wo das Ende (220) des Ventilschaftes aufgenommen ist, und einen äusseren Teil (227B), welcher am Rohr (212) und damit an dem entsprechenden Luftempfänger über ein Rohrzubehör gebunden ist.

18. Apparat, nach Anspruch 17, bei dem das kegelstumpfförmige Ventilorgan (223) und der Zylinderkopf (224) im äusseren Teil (227B) aufgenommen sind, sodass das kegelstumpfförmige Ventilorgan des Ventilsitz (222) versiegelt unter Unterbrechung der Verbindung zwischen äusserem Teil (227B) dem innerem Teil (227A).

19. Apparat, nach Anspruch 18, bei dem verschiedene achsiale Richtung aufweisende Rillen an der Oberfläche des Zylinderkopfes (22)4 geformt sind, und das Ventilorgan (223) an dem Zylinderkopf gebunden ist, derart um um das Verbindungsgebiet herum eine Ringflanke (261) zu bilden, welche ein kleinere Gebiet als jedes der entgegengesetzten ringförmigen Oberfläche (260) hat.

20. Apparat, nach Anspruch 19, bei dem der Ventilsitz (222) aus einem eingesetzten Stück besteht.

**Revendications**

1. Dispositif à commande automatique pour le drainage dans des réservoirs de gaz pressurisé (11A—11F) de véhicules industriels, comprenant un organe de commande (40), destiné à être mis en oeuvre automatiquement chaque fois que le véhicule est à l'arrêt, un système de commande (30) rattaché à cet organe de commande (40), de façon à effecteur au moins une course de commande à chaque mise en fonction de l'organe de commande (40), un organe (10) de soupape de drainage de condensat fourni pour chaque réservoir (11) d'où doit être drainé le condensat, chaque organe de soupape étant actionné par ce système de commande (30) pour passer de la position fermé à la position ouvert, et vice-versa, à chaque course de ce système de commande (30) et une tuyauterie (12) qui relie l'ouverture de drainage de chaque réservoir (11) à son organe de soupape (10), les organes de soupape (10) étant disposés sur deux rangs d'organes de soupape (10A—10C; 10D—10F), caractérisé par le fait que le système de commande a un organe mobile profilé en H (30) disposé entre les deux rangs et cet organe de soupape (10) et actionnant simultanément tous ces organes de soupape (10) et ces organes de commande comprenant un ensemble (40) de cylindre pneumatique à double effet et piston, dont le premier tube (50A) fournit de l'air comprimé à une première chambre et le deuxième tube (50B) fournit de l'air comprimé à une deuxième chambre, une première soupape à deux positions (60B) disposée dans ce deuxième tube (50B), et un organe (70) actionnant simultanément les deux soupapes à deux positions (60A—60B).

2. Appareil selon la revendication 1, dans lequel chaque organe de soupape (10A—10F) comprend un chemise cylindrique à deux chambres (14A—14B) séparées par une division (13) ouverte en son centre et fermée par un couvercle (15A—15B); un piston (16) muni d'un collier (18) ayant une extrémité aplatie (19) en dehors de ce couvercle (14A) et une extrémité (20) munie de rainures axiales, le piston (16) pouvant glisser dans l'ouverture du couvercle (15A) et la division 13; un ressort (21) disposé sur le piston (16) et agissant comme un ressort à compression entre le collier (18) et la division (13); un siège de soupape (22) formé dans cette chambre (14B); un organe de soupape à bille (23) disposée dans cette chambre (14B) de façon à sceller ce siège de soupape (22); un ressort (24) agissant comme ressort à compression entre cet organe de soupape à bille (23) et l'intérieur du couvercle (15B); un tube (25) formant une pièce avec le couvercle et un morceau de tube de drainage (26) ouvert à l'air libre; dans les organes de soupape (10A—10F) le siège de soupape (22) divise la chambre (14B) en une portion interne (27A) reliée à l'air libre à travers le tronçon de tube (26) et dans laquelle aboutit l'extrémité (20) du piston (16) et une portion externe (27B) qui est rattachée par l'accouplement en tube (25) au tube (12) et ensuite à son récepteur d'air (11) et dans laquelle aboutissent l'organe de soupape à bille (23) et le ressort (24).

3. Appareil selon la revendication 2, dans lequel cet organe mobile (30) actionnant les organes de soupape (10A—10F) est formé par le châssis profilé en H ayant deux bras (31A—31B) parallèles et une traverse centrale (32), le bras (31A) étant lié à une extrémité (33A—33C) de trois tiges de liaison (34A—34C) dont les autres extrémités sont liées aux extrémités (19A—19C) des pistons de leurs organes de soupape de drainage (10A—10C), le bras (31B) étant lié aux trois tiges et liaison (34D—34F) qui, à leur tour, sont rattachées aux extrémités externes (19D—19F), des pistons de leurs organes de soupape de drainage de condensat (10D—10F).

4. Appareil selon la revendication 3, dans lequel le châssis profilé en H (30) est contraint par deux couples d'organes de guidage fixes (36A—36B) à ne se déplacer que dans une direction axiale par rapport à l'enveloppe externe (CE) ses mouvements en travers étant entravés, et la traverse centrale (32) est reliée à l'extrémité (41) du piston (42) de l'ensemble cylindre pneumatique à double effet et piston (40).

5. Appareil selon la revendication 4, dans lequel l'ensemble à double effet pneumatique (40) comprend en outre une chemise cylindrique (43) dans laquelle un piston (44) qui divise la cavité interne du cylindre en deux chambres (45A et 45B) est coulissant et étanche, la première chambre (45A) étant pourvue d'un accessoire en tube (46A) qui apporte l'air comprimé et la deuxième chambre (45B) étant pourvue d'un accessoire en tube (46B) qui fournit lui aussi de l'air comprimé, la première soupape à deux positions (60A) étant disposée dans la tuyauterie (50A) reliée à ce premier accessoire de tuyauterie (46A) et la deuxième soupape à deux positions (60B) étant disposée dans la tuyauterie (50B) reliée à ce deuxième accessoire de tuyauterie (46B), les tubes (50A et 50B) étant approvisionnés en air comprimé par un des récepteurs d'air (11A—11F) au moyen d'un tuyau (51).

6. Appareil selon la revendication 5, dans lequel les deux soupapes (60A—60B), de type connu, ont la même structure et comprennent chacune une chemise cylindrique creuse (61A, 61B) pourvue d'un premier accessoire de tube (62A, 62B) et d'un deuxième accessoire de tube (63A, 63B) reliés à l'extérieur et diamétralement opposés l'un à l'autre, et d'un troisième accessoire de tube (64A, 64B) relié à l'extérieur et à distance angulaire du premier accessoire de tube (62A, 62B) et un corps cylindrique interne plein (65A, 65B) pourvu d'un passage diamétral (66A, 66B) à l'extrémité duquel est placée une chambre (67A, 67B) d'ampleur angulaire égale à la distance angulaire entre les accessoires de tube (62A, 62B) et (64A, 64B), chaque corps cylindrique plein (65A, 65B) étant capable de se déplacer dans sa chemise cylindrique creuse (61A, 61B) d'une distance angulaire égale à l'ampleur de ces chambres (67A, 67B), le mouvement étant commandé de l'extérieur.

7. Appareil selon la revendication 6, dans lequel les deux corps cylindriques pleins (65A, 65B) de ces soupapes (66A, 66B) sont actionnés par un arbre unique (68) et les soupapes sont disposées de telle façon que quand le passage diaméral (66A) d'un corps solide (65A) relie diamétralement ces accessoires de tuyauterie (62A) et (63A), l'un à l'autre, le deuxième passage diamétral (66B) du deuxième corps cylindrique (65B) subit une rotation par rapport à la position du premier, et vice-versa.

8. Appareil selon la revendication 6, dans lequel la chambre (67A, 67B) rleie les accessoires de tuyauterie adjacents (62A, 62B) et (64A, 64B) l'un à l'autre dans la position de ces passages diamètraux (66A, 66B) qui subit une rotation par rapport à la position dans laquelle ces accessoires·de tuyauterie (62A, 62B) et (63A, 63B) sont diamètralement reliés l'un à l'autre.

9. Appareil selon la revendication 8, dans laquelle l'arbre de commande (68) de ces corps rotatifs (65A, 65B) forme une pièce avec un bras de levier (69) à l'autre extrémité duquel est rattachée l'extrémité libre d'un piston (71) actionné par un organe de commande (70) actionnant simultanément les deux soupapes (60A, 60B).

10. Appareil selon la revendication 9, dans lequel l'organe de commande (70) comprend l'ensemble pneumatique piston et cylindre qui commande l'interruption du moteur agissant sur le refoulement (mécanisme à crémaillère) de la pompe d'injection.

11. Appareil selon la revendication 1, dans lequel l'organe de commande (40) est formé de deux chambres à soufflet (140A, 140B) ayant des organes de commande (144A, 144B) de diamètre différent et un piston (142) relié à cet organe mobile (130) qui, selon la course du piston, commande l'insertion et l'exclusion (on-off) des organes de soupape (110A, 110F).

12. Appareil selon la revendication 11 dans lequel chaque organe de soupape (10A—10F) comprend essentiellement: une caisse cylindrique à ailettes (210), un organe de soupape ouverte-fermé tronc conique (223), une tige de soupape (216) agissant sur l'organe de soupape on-off et lui étant relié; un ressort de retour (221) pour la tige de soupape (216) et une tête cylindrique rainurée (224) formant corps avec l'organe de soupape tronc-conique (223).

13. Appareil selon la revendication 12 dans lequel le corps cylindrique (210) a une chambre (214B) fermée par un couvercle (215B) d'un côté et ayant une cavité cylindrique (214A) de l'autre côté qui est "réalésé" à son extrémité externe (215A) et dans laquelle la tige de soupape (216) glisse, la tige de soupape (216) étant munie d'un collier (218) dont une extrémité est aplatie (219) au dehors de cette extrémité "réalésée" (215A) du corps (210) et une extrémité interne (220) reliée à l'organe de soupape tronc-conique (223).

14. Appareil selon la revendication 13, dans lequel un ressort hélicoïdal (221) agissant comme ressort à compression entre le collier (218) et le fond (213) du "réalésage" (215A) est disposé à l'extrémité externe de la tige de soupape (216).

15. Appareil selon la revendication 14, dans lequel le siège de soupape (222) formé dans la chambre (214B) divise celle-ci en une portion interne (227A) qui est reliée à l'aire libre par un morceau de tuyauterie (226) et dans laquelle aboutit l'extrémité (220) de la tige de soupape, et une portion externe (227B) reliée à la tuyauterie (212) et donc à son récepteur d'air au moyen d'un accessoire de tuyauterie.

16. Appareil selon la revendication 15, dans lequel un ressort à spirale (221) agissant comme ressort à compression entre le collier (218) et le fond (213) du "réalésage" (215) est disposé à l'extrémité extérieure de la tige de soupape (216).

17. Appareil selon la revendication 16, dans lequel un siège de soupape (222) formé dans la chambre (214B) divise cette dernière en une portion interne (227A) qui est reliée à l'air libre par un tronçon de tube (226) et dans laquelle aboutit l'extrémité (220) de la tige de soupape, et en une portion externe (227B) reliée au tube (212) et donc à son récepteur d'air au moyen d'un accessoire de tube (225).

18. Appareil selon la revendication 17, dans lequel l'organe de soupape tronc-conique (223) et une tête cylindrique (224) sont logés dans la portion externe (227B) de sorte que l'organe de soupape tronc-conique scelle ce siège de soupape (222) en interrompant la liaison entre la portion externe (227B) et la portion interne (227A).

19. Appareil selon la revendication 18, dans lequel différentes rainures de direction axiale sont formées sur la surface de la tête cylindrique (224), et l'organe de soupape (223) est relié à la tête cylindrique, de façon à former autour de la zone de raccord une face annulaire (261) ayant une surface inférieure à celle de la superficie circulaire opposée (260).

20. Appareil selon la revendication 19, dans lequel le siège de soupape (222) consiste en une pièce insérée.

FIG.1A

FIG 1B

# FIG. 2

FIG.3

FIG.4

4

FIG.5

FIG.6

FIG.7